# FASCICULE DE BREVET EUROPEEN

(11) **EP 1 549 152 B1**
(45) Date de publication et mention de la délivrance du brevet: **29.08.2007**
(21) Numéro de dépôt: 03778386.7
(22) Date de dépôt: 08.10.2003
(51) Int. Cl.: A23C 19/06, A23C 19/064, A23C 19/068

(54) **PROCEDE DE FABRICATION D'UNE PATE FROMAGERE PRESSEE, NON CUITE, ET PATE AINSI OBTENUE**
VERFAHREN ZUR HERSTELLUNG EINES GEPRESSTEN, NICHT-GEBRANNTEN KÄSEBRUCHS UND AUF DIESE WEISE HERGESTELLTER BRUCH
METHOD OF PRODUCING AN UNCOOKED PRESSED CHEESE PASTE AND PASTE THUS OBTAINED

(30) Priorité: 08.10.2002 FR 0212479
(43) Date de publication de la demande: 06.07.2005
(73) Titulaire: Walchli SA, F-15190 Condat en Feniers (FR)
(72) Inventeur: WALCHLI, Jean-Claude, F-15190 Condat en Feniers (FR)
(74) Mandataire: Guerre, Dominique
(86) Numéro de dépôt international: PCT/FR2003/002970
(87) Numéro de publication internationale: WO 2004/032640

(56) Documents cités:
- WO-A-00/51418
- FR-A- 2 800 570
- US-A- 4 152 101
- US-A- 4 332 831
- US-A- 4 539 902
- US-A1- 2001 017 083
- J. DAVIS: "Cheese Vol. III" 1976 , CHUCHILL LIVINGSTONE , LONDON XP002246436 page 655 -page 656

## Description

La présente invention concerne un procédé de fabrication d'une pâte fromagère non cuite, ayant subi un double pressage et une double maturation, prête à être découpée en portions.

La description de l'invention sera plus particulièrement faite en référence à un fromage de type Cantal ou Cheddar, mais l'invention s'étend à toute pâte fromagère non cuite, salée, sucrée, nature et/ou diversement parfumée.

L'appellation d'origine « Cantal » est réservée aux fromages répondant aux dispositions de la législation en vigueur définies dans le Décret CANTAL du 29/12/86, qui détermine notamment l'aire géographique sur laquelle le lait doit être produit et les fromages fabriqués, certaines caractéristiques comme la teneur en matière grasse et celle en matière sèche des fromages, ainsi que leur présentation. De manière plus générale, le Cantal appartient à la famille des fromages à pâte pressée, non cuite, dont font également partie le Salers du même territoire, mais aussi le Cheddar.

Ces fromages sont obtenus par des procédés ancestraux comprenant principalement les étapes décrites ci-après.

A partir de lait soit cru, soit pasteurisé et ensemencé de levains, puis emprésuré, on obtient un caillé que l'on presse, selon une première phase de pressage, pour expulser le lactosérum. Cette étape est réalisée par déversement du caillé dans un bac de drainage / pressage, puis disposé dans une toile où il est comprimé sous l'effet d'un presse-tomme. Le rendement de ce pressage est amélioré en découpant et en retournant plusieurs fois la masse.

La tomme ainsi obtenue est maintenue au repos, pour une première phase de fermentation ou maturation, au cours de laquelle les enzymes bactériennes dégradent les protéines de la tomme, et les sucres, notamment le lactose, sont convertis en acide lactique. Cette étape qui dure d'environ 8 à 16 heures est effectuée dans des conditions précises de température, à savoir entre 16 et 22°C, de ventilation, d'humidité.

La particularité de cette pâte réside en ce qu'elle subit un nouveau cycle de maturation / pressage. A cet effet, la tomme est découpée, puis broyée dans un moulin à tomme par exemple, en même temps que du sel, à l'état sec, est ajouté. Un salage en masse optimal est atteint par brassages répétés des grains de tomme avec le sel. Les grains de tomme salés sont mis au repos, au cours d'une seconde phase de maturation, pendant environ de 6 à 12 heures. Durant cette phase, l'exsudation du lactosérum se poursuit, par osmose en raison de la concentration en sel et sous l'effet de l'abaissement du pH, et un tassement naturel de la tomme a lieu avec une solidarisation des grains de tomme. L'acidité du lactosérum est régulièrement mesurée, et la seconde phase de maturation s'achève lorsque cette acidité atteint une valeur voisine de 100 degrés Dornic (°D). La tomme ainsi obtenue est dispersée, soit manuellement, soit par un nouveau passage dans le moulin à tomme, puis déversée dans des moules par couches successives, après chacune desquelles la tomme est tassée manuellement ou automatiquement. Les moules sont avantageusement équipés de parois en plastique microperforé et comportant un tramage intérieur, afin d'éviter l'utilisation traditionnelle de toiles de lin qui nécessitent d'être retendues, d'être changées car trop humides pendant la seconde phase de maturation. Un foncet est ensuite disposé sur chacune des tommes pour leur appliquer une pression, et elles sont mises au repos pour achever le processus de fermentation lactique.

Les tommes ainsi obtenues, ayant subi une épuration maximale, ont des teneurs infimes en sucres fermentescibles et en lactosérum.

Le fromage entre alors dans un processus d'affinage, au fur et à mesure duquel vont évoluer la couleur et la texture de la pâte, l'aspect de la croûte et les saveurs, par action enzymatique. Des conditions précises de température, d'humidité sont imposées. Selon les qualités de fromage, l'affinage peut durer de 1 à 4 mois, voire plus.

Le fromage d'appellation « Cantal » se présente sous la forme d'une meule d'un poids variant de 35 à 45 kg ; deux variantes bénéficiant de cette appellation et dénommées « Petit Cantal » et « Cantalet » ont un poids de 15 à 20 kg, et de 8 à 10 kg, respectivement.

Pour la commercialisation de ce type de fromage, soit les meules sont envoyées dans des ateliers de préemballage, soit elles sont stockées en chambre froide, chez le détaillant pour le rayon « coupe ».

Il ressort de ce procédé de fabrication que ce type de fromage, à pâte pressée, non cuite, résultant d'au moins deux cycles de pressage /maturation, n'est disponible qu'en un seul format, lourd et volumineux, et dont la distribution est difficile. Chez un détaillant, le stockage de ce fromage pour une longue période en fonction du débit de la vente, pose un problème si la conservation n'est pas assurée dans des conditions appropriées.

Le document, J. Davis, Cheese, vol. 11, pp 655-656, rappelle, de manière générale, le procédé traditionnel de fabrication du Cantal selon les étapes suivantes. Il comprend les étapes suivantes :
on obtient un caillé à partir de la coagulation du lait avec de la présure, et préalablement ensemencé avec un levain,
le sérum est évacué, le caillé est pressé et découpé en blocs,
les blocs sont enveloppés dans un tissu, déposés sur un égouttoir et pressés par application d'un poids,
au bout de 3 heures, ils sont découpés et laissés reposer pendant 3-4 heures,
le caillé est ensuite broyé, disposé dans des bacs, salé et laissé pour maturation,
puis le caillé est de nouveau broyé et placé dans des moules à Cantal consistant en des cylindres perforés, un foncet étant placé sur le haut du fromage, pour obtenir des tommes de 19, 35 ou 45 kg.

US-A-4,539,902, décrit un procédé de fabrication de fromage consistant à déverser le caillé dans un conteneur cylindrique à paroi perforée, par sa partie supérieure, pour obtenir un boudin de caillé. Le sérum est expulsé du cylindre par les perforations et l'air extrait par une pompe à vide. Le boudin est poussé vers le bas du cylindre dans un moule où l'extrémité du boudin est séparée pour constituer la tomme.

US-A-4,332,831, décrit un procédé automatisé de fabrication de fromage, notamment Parmesan, Rçmano, Asiago, Fontinella et Kasserie, selon lequel on mélange un caillé égoutté dans un mélangeur avec du sel, on place le caillé salé dans un conteneur conique perforé pour évacuer le sérum, en une quantité suffisante pour maintenir une certaine pression sur le caillé, et on franche la tomme à la sortie du cylindre.

FR-A-2 800 570, décrit un procédé d'obtention d'un bloc de caillé égoutté et préformé selon lequel le caillé est déversé dans un conteneur cylindrique à paroi perméable et dont l'extrémité inférieure présente une fermeture amovible. Quand le conteneur est fermé, le caillé s'accumule pour former un boudin, éventuellement sous l'action d'un poids disposé à son sommet, puis l'extrémité du conteneur est libérée pour expulser le boudin qui est tranché à la taille de la tomme.

Ces trois derniers documents concernent l'obtention d'un fromage, à pâte éventuellement cuite, qui n'a subi au plus qu'une seule maturation. La matière introduite dans le conteneur cylindrique ou conique est un caillé salé qui n'a subi aucune étape de maturation, soit un gel, et correspond à une étape d'égouttage et de préformage.

Pour ouvrir un autre avenir à la consommation d'un type de fromage tel que le Cantal ou Cheddar décrit précédemment la Demanderesse a mis au point un procédé qui résout les problèmes précités.

Selon ce procédé, on obtient un fromage qui tout en conservant toutes les qualités biologiques et organoleptiques du fromage de Cantal, devient disponible en un format variable et préemballé, après respect notamment du double pressage / fermentation caractéristique de ce fromage.

Comme dit précédemment, l'invention s'applique à l'obtention d'un fromage précité, mais est aussi adaptée à la fabrication d'une pâte non salée et/ou non nécessairement affinée. Ainsi, selon l'invention, on peut obtenir une pâte fromagère nature, salée, sucrée, qui peut en outre être parfumée par exemple avec de l'extrait de gentiane, ou être additionnée de noix ou de tout autre fruit ou extrait de fruit. La pâte peut aussi être ensemencée avec des pénicilliums latents aptes à se développer à tout moment prédéterminé par exposition à l'oxygène. Ces pénicilliums sont disponibles dans le commerce et peuvent être ajoutés à toute étape du procédé, par exemple ils sont ajoutés dans le lait de départ, ou dans la pâte.

Le produit résultant pouvant se présenter en blocs prêts à découper ou en portions individuelles, pour être par exemple utilisé en en-cas, en complément alimentaire riche en calcium.

Le coeur de l'invention réside essentiellement en une modification de la seconde phase de pressage décrite ci-dessus, sans que son efficacité en soit affectée.

Un premier objet de l'invention est un procédé de fabrication d'une pâte fromagère pressée, non cuite, comprenant les étapes suivantes :
on obtient un caillé à partir de la coagulation d'un lait cru et/ou pasteurisé et préalablement ensemencé en levains,
on presse le caillé pour obtenir un volume de tomme,
on laisse reposer la tomme, selon une première phase de maturation,
on broie la tomme pour obtenir des grains de tomme,
on laisse reposer la tomme, selon une seconde phase de maturation,
on disperse la tomme pour obtenir des grains de tomme,
on déverse les grains de tomme salés dans une mouleuse tubulaire à axe vertical comprenant au moins une colonne tubulaire, et
on presse les grains de tomme dans ladite colonne au moins pour y former un boudin, prêt à être découpé.

L'étape de passage des grains de tomme salés dans la mouleuse assure la seconde phase de pressage.

Selon une variante du procédé, le boudin est divisé, au bas de la colonne, dans plusieurs filières verticales pour obtenir en sortie de filière, des blocs de pâte prêts à être découpés.

Le boudin ou les blocs de pâte ainsi obtenus peuvent être aussitôt découpés et conditionnés, ce qui a l'avantage d'intégrer l'étape d'emballage au procédé de préparation, sans rupture de la chaîne de fabrication.

Les portions découpées sont de préférence emballées dans des barquettes plastique thermoformées et scellées par un film plus ou moins perméables à l'oxygène de l'air, ou sous atmosphère modifiée, ou dans des sacs plastique thermo-soudés, comportant au moins une face transparente rendant le produit emballé visible. Cette étape de conditionnement est de préférence réalisée à une température voisine de celle du lieu de stockage du produit final, généralement une chambre froide.

C'est donc dans l'emballage que l'affinage de la pâte se déroule, et les exemples mettront en évidence que les caractéristiques biochimiques du fromage sont semblables à celles du Cantal. Pour parvenir à un affinage optimal, il est avantageux d'emballer les portions de fromage découpé, sous un mélange gazeux azote / oxygène, dans lequel la teneur en oxygène varie en fonction de l'affinage désiré.

Selon l'invention, et notamment pour tout produit n'étant pas destiné à une protéolyse, on peut empêcher l'affinage de se produire. A cet effet, on soumettra soit la pâte fromagère, soit la portion découpée, avant ou après conditionnement, à un traitement antibactérien. Un tel traitement est choisi parmi ceux déjà utilisés dans le domaine alimentaire et bien connus de l'homme du métier ; à titre d'exemple, on retiendra l'ionisation et la stérilisation appliquées aux produits pâteux.

Dans une variante préférée de l'invention, la pâte fromagère est salée, et le fromage obtenu est du type Cantal. La seule caractéristique qui le différencie du Cantal est l'absence de croûte. Dans le Cantal, la croûte associée aux conditions d'affinage, favorise la dessiccation de la meule qui progresse de l'extérieur vers l'intérieur et apporte un affinage complémentaire. Selon l'invention, aucune altération de l'affinage n'est observée, car la composition biologique de chacune des pâtes est identique, à savoir, présence des mêmes types d'enzymes qui vont dégrader les mêmes types de protéines, et absence de sucres fermentescibles et de lactosérum. En outre, l'humidité de la matière non grasse est maintenue à son taux initial.

Lorsque l'on veut obtenir un fromage de type Cantal selon l'invention, les conditions d'obtention des grains de tomme avant la seconde phase de pressage, peuvent être et sont avantageusement identiques à celles de la fabrication du Cantal. En particulier :
on part d'un lait cru ou pasteurisé et ensemencé avec le même type de levains puis on le coagule avec de la présure, et/ou
la première phase de maturation est réalisée à une température variant de 16-22°C, pendant une durée variant de 8 à 16 heures, et/ou
après la première phase de maturation, la tomme est broyée et salée avec du sel sec, et/ou
la seconde phase de maturation est réalisée à une température de 16-22°C, pendant une durée variant de 6 à 12 heures.

Comme indiqué précédemment, la mouleuse tubulaire comprend au moins une colonne tubulaire dont l'extrémité inférieure peut s'ouvrir en une multiplicité de filières verticales, dans lesquelles la seconde phase de pressage de la pâte sera poursuivie. Le passage de la pâte dans la ou les colonnes de la mouleuse, puis dans les filières est réalisé sous l'action d'un foncet apte à coulisser dans lesdites colonnes. A titre d'exemple, l'aire de base de la colonne est comprise entre 20 et 400 cm², et la pression est appliquée dans une fourchette de 0,5 à 2 bars.

Afin de favoriser l'exsudation ultime du lactosérum lors du second pressage de la pâte, les parois desdites colonnes de la mouleuse et des filières sont avantageusement microperforées, par exemple sous la forme de micropores et/ou de microlumières longitudinales.

L'extrémité inférieure des colonnes de la mouleuse ou celle des filières est avantageusement prolongée par un conformateur réglable pour la hauteur de découpe et comprenant des couteaux.

Aussitôt découpées, les portions seront convoyées en continu au travers d'une enceinte type salle blanche jusqu'au poste de conditionnement.

Les exemples ci-après illustrent les qualités d'un fromage obtenu selon l'invention, en comparaison avec celles du Cantal.

### Exemple 1 :

Analyse biologique d'un fromage obtenu selon le procédé de l'invention à JO correspondant à la date d'emballage du fromage à la sortie de la mouleuse, et après 10 jours (J + 10), 17 (J + 17), 38 jours (J + 38) et 100 jours (J + 100) d'affinage en emballage plastique.

| Echantillons | Extrait sec total (EST) | Matières grasses (MG) | MG/EST | pH | Taux de sel |
|---|---|---|---|---|---|
| | /100g | /100g | | | (en %) |
| J+10 | 63,50 | 30,25 | 47,90 | 5,21 | 2,15 |
| J+17 | 63,41 | 29,75 | 46,91 | 5,16 | 2,10 |
| J+38 | 63,24 | 31,75 | 50,20 | 5,50 | 2,10 |
| J+100 | 62,82 | 31,00 | 49,30 | 5,30 | 1,70 |

Selon l'article 2 du Décret CANTAL du 29/12/86, les fromages bénéficiant de l'appellation d'origine « Cantal », sont des fromages à croûte sèche fabriqués avec du lait de vache emprésuré, à pâte ferme, non cuite, deux fois pressée, avec broyage du caillé entre les deux pressages, salée dans la masse, renfermant au minimum 45 g de matière grasse pour 100 g de fromage après complète dessiccation (rapport MG/EST) et dont la teneur en matière sèche ne doit pas être inférieure à 57 g pour 100 g de fromage affiné, et plus particulièrement de 56% minimum à 30 jours.

On observe que ces deux paramètres définis pour une pâte selon l'invention sont conformes aux dispositions du Décret CANTAL.

### Exemple 2 :

Analyses microbiologiques d'un fromage obtenu selon le procédé de l'invention, à J0 correspondant à la date d'emballage du fromage à la sortie de la mouleuse, et après 10 jours (J + 10), 17 jours (J + 17) et 68 jours (J + 68) d'affinage en emballage plastique.

| Microorganismes | Méthode de détermination | Résultats | | |
|---|---|---|---|---|
| | | Tomme à Cantal | J+10 | J + 68 |
| | | 247 | J+17 | |
| | | | J+38 | |
| Microorganismes aérobies 30°C | NF V 08051-JO 17.05.94 | > 300 000 000/g | > 300 000 000/g | > 300 000 000/g |
| Escherichia coli β glucuronidase + | V 08 053 | 20 ne* | > 15 000/g | > 15 000/g |
| Salmonella | NF V08 052 | | Absence/25 g | Absence/25g |
| Staphylocoques à coagulase + | V 08 057-1 | <10/g | < 100/g | < 10/g |
| Listeria monocytogenes | NF EN ISO 11290-1 à 37°C | | Absence/25 g | Absence/25 g |

| | | | | |
|---|---|---|---|---|
| * ne est le nombre estimé de colonies comptées à la première dilution | | | | |

Ces analyses sont conformes à celles requises pour le fromage d'appellation Cantal.

## Revendications

1. Procédé de fabrication d'une pâte fromagère pressée, non cuite, comprenant les étapes selon lesquelles
on obtient un caillé à partir de la coagulation d'un lait cru et/ou pasteurisé préalablement ensemencé en levains,
on presse le caillé pour obtenir un volume de tomme,
on laisse reposer la tomme, selon une première phase de maturation,
on broie la tomme pour obtenir des grains de tomme,
on laisse reposer la tomme, selon une seconde phase de maturation,
on disperse la tomme pour obtenir des grains de tomme
ledit procédé étant **caractérisé en ce que**
on déverse les grains de tomme salés dans une mouleuse tubulaire à axe vertical comprenant au moins une colonne tubulaire,
on presse les grains de tomme dans ladite colonne au moins pour y former un boudin prêt à être découpé.

2. Procédé selon la revendication 1, **caractérisé en ce qu'**on divise; au bas de la colonne, ledit boudin dans plusieurs filières verticales pour obtenir, en sortie de filière, des blocs de pâte prêt à être découpés.

3. Procédé selon la revendication 1 ou 2, **caractérisé en ce que** le boudin ou les blocs de pâte sont découpés en portions qui sont conditionnées, individuellement.

4. Procédé selon la revendication 1 ou 2, **caractérisé en ce qu'**on presse les grains de tomme au moyen d'un foncet adapté pour coulisser dans la ou les colonnes tubulaires.

5. Procédé selon la revendication 1 ou 2, **caractérisé en ce que** la paroi de la ou des colonnes et/ou celle des filières verticales sont microperforées.

6. Procédé selon la revendication 1 ou 2, **caractérisé en ce que** la partie inférieure de la ou des colonnes ou des filières est prolongée par un conformateur.

7. Procédé selon la revendication 6, **caractérisé en ce que** le conformateur comprend des couteaux.

8. Procédé selon la revendication 6 ou 7, **caractérisé en ce que** le conformateur est réglable pour la hauteur de découpe de la pâte.

9. Procédé selon la revendication 1, **caractérisé en ce que** la pâte fromagère est parfumée et/ou additionnée de produits intermédiaires, éventuellement broyés et/ou ensemencée en pénicilliums latents.

10. Procédé selon l'une quelconque des revendications précédentes, **caractérisé en ce que**, la pâte, ou les portions, avant ou après conditionnement, sont soumises à un traitement antibactérien.

11. Procédé selon la revendication 10, **caractérisé en ce que** ledit traitement est choisi parmi l'ionisation et la stérilisation.

12. Procédé selon la revendication 1 ou 2, **caractérisé en ce que** la pâte fromagère est salée et qu'elle consiste en un fromage du type Cantal.

13. Procédé selon la revendication 12, **caractérisé en ce que** le lait est emprésuré.

14. Procédé selon la revendication 12 ou 13, **caractérisée en ce que** la première phase de maturation est réalisée à une température de 16-22°C, pendant une durée variant de 8 à 16 heures.

15. Procédé selon l'une quelconque des revendications 12 à 14, **caractérisé en ce que**, après la première phase de maturation, la tomme est broyée et salée avec du sel sec.

16. Procédé selon la revendication l'une quelconque des revendications 12 à 15, **caractérisée en ce que** la seconde phase de maturation est réalisée à une température de 16-22°C, pendant une durée variant de 6 à 12 heures.

## Claims

1. A method of producing an uncooked pressed cheese paste comprising the following steps:
a curd is obtained from the coagulation of a raw and/or pasteurized milk and milk which has been seeded with ferments,
the curd is pressed in order to produce a volume of tomme,
the tomme is left to stand for a first maturation phase,
the tomme is ground to produce grains of tomme,
the tomme is left to stand for a second maturation phase,
the tomme is broken up to produce grains of tomme,
said method being **characterized in that**
the salted grains of tomme are poured into a tubular molding machine with a vertical axis, comprising at least one tubular column, and
the grains of tomme are pressed in said column in order at least to form therein a roll ready to be cut.

2. The method as claimed in claim 1, **characterized in that** said roll is divided at the bottom of the column in several vertical dies so as to obtain, at the outlet of the die, blocks of paste ready to be cut.

3. The method as claimed in claim 1 or 2, **characterized in that** the roll or the blocks of paste are cut into portions which are packaged individually.

4. The method as claimed in claim 1 or 2, **characterized in that** the grains of tomme are pressed by means of a follower adapted to slide into the tubular column(s).

5. The method as claimed in claim 1 or 2, **characterized in that** the wall of the column(s) and/or that of the vertical dies are microperforated.

6. The method as claimed in claim 1 or 2, **characterized in that** the lower part of the column(s) or of the dies is extended by a cooling jig.

7. The method as claimed in claim 6, **characterized in that** the cooling jig comprises knives.

8. The method as claimed in claim 6 or 7, **characterized in that** the cooling jig can be adjusted for the cutting height of the paste.

9. The method as claimed in claim 1, **characterized in that** the cheese paste is flavored and/or supplemented with intermediate products, optionally ground and/or seeded with latent penicilliums.

10. The method as claimed in any one of the preceding claims, **characterized in that** the paste, or the portions, before or after packaging, are subjected to an antibacterial treatment.

11. The method as claimed in claim 10, **characterized in that** said treatment is chosen from ionization and sterilization.

12. The method as claimed in claim 1 or 2, **characterized in that** the cheese paste is salted and **in that** it consists of a Cantal-type cheese.

13. The method as claimed in claim 12, **characterized in that** the milk is renneted.

14. The method as claimed in claim 12 or 13, **characterized in that** the first maturation phase is carried out at a temperature of 16-22°C, for a period varying from 8 to 16 hours.

15. The method as claimed in any one of claims 12 to 14, **characterized in that**, after the first maturation phase, the tomme is ground and salted with dry salt.

16. The method as claimed in any one of claims 12 to 15, **characterized in that** the second maturation phase is carried out at a temperature of 16-22°C for a period varying from 6 to 12 hours.

## Patentansprüche

1. Verfahren zur Herstellung eines gepressten, nicht gebrannten Käseteigs, bei dem man
durch die Dicklegung von Rohmilch und/oder pasteurisierter Milch, in die zuvor Säuerweckerkulturen eingesät worden sind, Käsebruch erhält,
den Käsebruch zum Erhalt einer Tomme-Masse presst,
den Tomme gemäß einer ersten Reifungsphase ruhen lässt,
den Tomme zum Erhalt von Tomme-Körnern zerkleinert,
den Tomme gemäß einer zweiten Reifungsphase ruhen lässt,
den Tomme zum Erhalt von Tomme-Körnern zerteilt,
**dadurch gekennzeichnet, dass**
man die gesalzenen Tomme-Körner in eine rohrförmige Formmaschine mit vertikaler Achse, die mindestens eine rohrförmige Säule aufweist, kippt und die Tomme-Körner in der Säule presst, um mindestens dort einen schneidfertigen Strang zu bilden.

2. Verfahren nach Anspruch 1, **dadurch gekennzeichnet, dass** man den Strang unten an der Säule in mehrere vertikale Düsen verteilt, um am Düsenausgang schneidfertige Teigblöcke zu erhalten.

3. Verfahren nach Anspruch 1 oder 2, **dadurch gekennzeichnet, dass** der Strang oder die Teigblöcke in Portionen geschnitten werden, die einzeln verpackt werden.

4. Verfahren nach Anspruch 1 oder 2, **dadurch gekennzeichnet, dass** man die Tomme-Körner mittels eines Bodenblechs presst, das in der oder den rohrförmigen Säulen gleiten kann.

5. Verfahren nach Anspruch 1 oder 2, **dadurch gekennzeichnet, dass** die Wand der Säule oder Säulen und/oder die der vertikalen Düsen Mikroperforationen aufweisen.

6. Verfahren nach Anspruch 1 oder 2, **dadurch gekennzeichnet, dass** der untere Teil der Säule oder Säulen oder der Düsen durch eine Abkühlvorrichtung verlängert ist.

7. Verfahren nach Anspruch 6, **dadurch gekennzeichnet, dass** die Abkühlvorrichtung Messer aufweist.

8. Verfahren nach Anspruch 6 oder 7, **dadurch gekennzeichnet, dass** die Abkühlvorrichtung hinsichtlich der Teigschneidhöhe einstellbar ist.

9. Verfahren nach Anspruch 1, **dadurch gekennzeichnet, dass** der Käseteig aromatisiert wird und/oder mit gegebenenfalls zerkleinerten Zwischenprodukten versetzt wird und/oder latente Penicillium-Bakterien eingesät werden.

10. Verfahren nach einem der vorhergehenden Ansprüche, **dadurch gekennzeichnet, dass** der Teig oder die Portionen vor oder nach dem Verpacken einer bakterienhemmenden Behandlung unterzogen wird bzw. werden.

11. Verfahren nach Anspruch 10, **dadurch gekennzeichnet, dass** die Behandlung unter Ionisierung und Sterilisierung ausgewählt wird.

12. Verfahren nach Anspruch 1 oder 2, **dadurch gekennzeichnet, dass** der Käseteig gesalzen wird und dass er aus einem Käse der Cantal-Art besteht.

13. Verfahren nach Anspruch 12, **dadurch gekennzeichnet, dass** die Milch gelabt wird.

14. Verfahren nach Anspruch 12 oder 13, **dadurch gekennzeichnet, dass** die erste Reifungsphase bei einer Temperatur von 16 - 22°C während eines Zeitraums von 8 bis 16 Stunden durchgeführt wird.

15. Verfahren nach einem der Ansprüche 12 bis 14, **dadurch gekennzeichnet, dass** der Tomme nach der ersten Reifungsphase zerkleinert und mit Trockensalz gesalzen wird.

16. Verfahren nach einem der Ansprüche 12 bis 15, **dadurch gekennzeichnet, dass** die zweite Reifungsphase bei einer Temperatur von 16 - 22°C während eines Zeitraums von 6 bis 12 Stunden durchgeführt wird.
